# FASCICULE DE BREVET EUROPEEN

(11) **EP 1 205 127 B1**
(45) Date de publication et mention de la délivrance du brevet: **11.05.2005**
(21) Numéro de dépôt: 01420219.6
(22) Date de dépôt: 06.11.2001
(51) Int. Cl.: A47J 39/00

(54) **Dispositif pour la conservation et la remise à température de plateaux-repas**
Modulare Einrichtung zum Konservieren und zum Aufwärmen von Servierplatten
Device for preservation and re-heating of meal-trays

(30) Priorité: 07.11.2000 FR 0014511
(43) Date de publication de la demande: 15.05.2002
(73) Titulaire: Societe Cooperative de Production Bourgeois, 69400 Villefranche sur Saone (FR)
(72) Inventeur: Richard, Philippe, 74210 Doussard (FR); Excoffon, Emmanuel, 74210 Cons Sainte Colombe (FR)
(74) Mandataire: Poncet, Jean-François

(56) Documents cités:
- US-A- 5 159 973
- US-A- 6 120 819

## Description

La présente invention concerne la distribution collective de repas, par exemple dans les hôpitaux ou autres collectivités similaires, permettant la conservation et la remise à température d'aliments placés sur un plateau-repas.

Dans la distribution collective de repas, on utilise fréquemment des plateaux-repas sur lesquels les aliments sont disposés pour être directement accessibles par le consommateur pendant la prise de repas sans nécessiter de manipulations supplémentaires. Les plateaux-repas comprennent généralement une première partie de plateau supportant les aliments destinés à être consommés froids, et une seconde partie de plateau supportant les aliments destinés à être consommés chauds. Les plateaux-repas sont préparés dans une cuisine collective, puis ils sont transportés collectivement dans un chariot isolant ou réfrigéré contenant généralement 10 à 40 plateaux-repas.

Un tel chariot est décrit par exemple dans le document US 5,159,973. Les aliments destinés à être consommés froids sont conservés au froid par une source de froid intégrée qui agit sur une moitié des plateaux-repas. Les aliments destinés à être consommés chauds sont sur l'autre moitié des plateaux-repas, isolée de la première moitié de plateaux-repas par une cloison fixe. Lors de la prise de repas, le personnel doit retirer les plateaux-repas du chariot, et les distribuer aux consommateurs.

Une difficulté est le respect des conditions d'hygiène, et notamment des conditions de température tant pour la conservation des aliments que pour leur remise à température correcte. En effet, en fin de remise à température, les aliments destinés à être consommés chauds doivent être à une température à coeur voisine de 65°C, tandis que les aliments destinés à être consommés froids doivent être à une température à coeur de 8°C environ. Or tous ces aliments sont disposés sur un même plateau-repas, et l'on conçoit qu'un échange de chaleur tend à se produire entre la partie de plateau supportant les aliments chauds et la partie de plateau supportant les aliments froids.

Ces dispositifs connus ne permettent pas le respect de ces conditions d'hygiène, ce qui favorise le développement de bactéries et la propagation de certaines maladies.

Pour améliorer la conservation et la remise à température d'aliments placés sur un plateau-repas, permettant de conserver les aliments au froid jusqu'à la période de remise à température, et d'assurer une remise à température correcte pour que les aliments soient à température normalisée lors de la prise de repas, on a déjà conçu, comme décrit dans le document US 6,120,819 un dispositif pour la conservation et la remise à température d'aliments placés sur un plateau-repas comprenant :
- une enceinte isolante ayant un espace intérieur de réception de plateau accessible par un passage antérieur et divisé en un compartiment postérieur et un compartiment antérieur qui communiquent l'un avec l'autre par un passage intermédiaire,
- une source de froid adaptée pour maintenir à température de conservation appropriée l'espace intérieur de réception de plateau dans l'enceinte isolante,
- une source de chaleur, adaptée pour générer une énergie calorifique de remise à température dans un espace d'échauffement situé dans l'un des compartiments antérieur ou postérieur,
- un volet de fermeture antérieur et un volet de fermeture intermédiaire, couplés mécaniquement l'un à l'autre par des bras articulés, et en déplacement vertical entre (i) une position fermée dans laquelle le volet de fermeture antérieur ferme le passage antérieur et le volet de fermeture intermédiaire ferme le passage intermédiaire au-dessus du plateau-repas pour assurer une isolation thermique, et (ii) une position ouverte dans laquelle les volets de fermeture antérieur et intermédiaire sont escamotés pour autoriser le déplacement antéropostérieur du plateau-repas et des aliments qu'il porte.

Une telle structure assure une certaine isolation thermique entre la partie contenant les aliments échauffés et la partie contenant les aliments froids, et permet en principe une manipulation simultanée des volets d'isolation thermique puisque le volet antérieur est directement accessible par l'utilisateur.

Il est apparu que la structure à deux volets décrite succinctement dans ce document US 6,120,819 ne donne pas satisfaction : le mouvement de coulissement vertical des deux volets nécessite des glissières latérales de guidage verticales étanches et des articulations de liaison avec les bras de liaison. Ces organes compliquent la fabrication du dispositif et en augmentent le coût, nécessitent des précautions particulières pour assurer une étanchéité satisfaisante, et surtout constituent un ensemble trop complexe pour être aisément nettoyé et pour satisfaire ainsi les normes alimentaires. Le document est silencieux sur ces problèmes et leurs solutions éventuelles.

Le problème proposé par l'invention est de concevoir une nouvelle structure d'isolation thermique entre les compartiments chaud et froid qui soit à la fois simple, efficace et peu onéreuse, permettant en particulier un nettoyage plus aisé respectant les normes alimentaires et les conditions d'hygiène.

Un autre objet de l'invention est de concevoir un tel dispositif qui soit particulièrement simple à manipuler, pour être accessible par des personnes à mobilité réduite tels que des malades sur un lit d'hôpital.

Pour atteindre ces buts ainsi que d'autres, dans une structure selon le document US 6,120,819, l'invention prévoit que les deux volets de fermeture antérieur et intermédiaire sont reliés rigidement l'un à l'autre par les deux bras latéraux longitudinaux qui sont montés pivotants dans l'espace intérieur de réception de plateau selon deux axes de rotation colinéaires transversaux, les deux volets et les deux bras formant un ensemble rigide qui bascule entre les positions fermée et ouverte. Les axes de rotation sont des ergots horizontaux qui s'engagent dans des encoches verticales de manière amovible. Le dispositif est plus simple, notamment par le fait qu'il n'y a plus de glissières de guidage en coulissement vertical des volets, le guidage étant assuré par les seuls axes de rotation. Et l'ensemble rigide est démontable, pour en permettre le nettoyage.

L'étanchéité au pourtour du volet de fermeture intermédiaire peut être améliorée en prévoyant de simples languettes élastiques, par exemple en élastomère, qui viennent en appui glissant sur une surface de contact conformée. Par exemple, les bords latéraux du volet sont incurvés en arc centré sur l'axe de rotation, et des languettes incurvées solidaires du bâti restent en appui frontal sur lesdits bords latéraux du volet. Les bords transversaux du volet sont rectilignes, et des languettes transversales rectilignes solidaires du bâti restent en appui frontal sur lesdits bords transversaux du volet.

Profitant de l'élasticité des languettes assurant l'étanchéité, l'ensemble rigide basculant est aisément démontable pour en permettre le nettoyage. Les axes de rotation peuvent être des ergots fixes horizontaux qui s'engagent verticalement et de manière amovible dans deux encoches verticales du bord inférieur des bras de liaison. En alternative, les ergots horizontaux peuvent être prévus sur les bras de liaison, pour s'engager de manière amovible dans des encoches verticales fixes du bâti.

De préférence, l'espace d'échauffement est situé dans le compartiment postérieur, de sorte que l'utilisateur peut prendre le plateau par la zone froide.

Selon un mode de réalisation avantageux, l'espace d'échauffement est situé entre une partie postérieure du plateau-repas et une cloche qui lui est superposée pour fermer ledit espace d'échauffement. On améliore ainsi l'isolation thermique entre la partie chaude et la partie froide des aliments.

Le dispositif peut avantageusement comprendre des moyens d'alimentation en énergie électrique, adaptés pour alimenter en énergie électrique une ou plusieurs résistances électriques dans l'espace d'échauffement.

De préférence, la ou les résistances électriques sont incorporées dans la paroi de la cloche. Ainsi on augmente encore l'isolation thermique entre la partie chaude et la partie froide, en évitant les échanges thermiques directs par le corps du plateau lui-même.

Selon une réalisation avantageuse, la cloche est amovible et portée par le plateau-repas.

De préférence, le dispositif comprend en outre un espace intérieur complémentaire, placé au-dessous de l'espace intérieur de réception de plateau, accessible par un côté antérieur ouvert, climatisé par la source de froid, avec une porte antérieure pour obturer sélectivement ledit côté antérieur ouvert et le passage antérieur en avant du volet de fermeture antérieur. Un tel dispositif peut ainsi servir à la fois de table de nuit, de dispositif de remise à température et de conservation d'aliments sur plateau-repas, et de réfrigérateur.

D'autres objets, caractéristiques et avantages de la présente invention ressortiront de la description suivante de modes de réalisation particuliers, faite en relation avec les figures jointes, parmi lesquelles:
- la figure 1 est une vue en perspective schématique d'un dispositif selon un mode de réalisation de la présente invention ;
- la figure 2 est une vue en perspective montrant les parties intérieures du dispositif de la figure 1 concernant les moyens de conservation et de remise à température d'aliments, avec un plateau-repas en position, et avec les volets en position ouverte ;
- la figure 3 illustre la vue extérieure en perspective plongeante des parties de dispositif de la figure 2, avec les volets en position ouverte ;
- la figure 4 est une vue en perspective en contre-plongée du dispositif de la figure 3 en position ouverte ;
- la figure 5 est une vue similaire à la figure 3, montrant les parties intérieures du dispositif en position fermée ; et
- la figure 6 est une vue en perspective montrant les volets couplés l'un à l'autre et formant avec les bras de liaison un ensemble rigide.

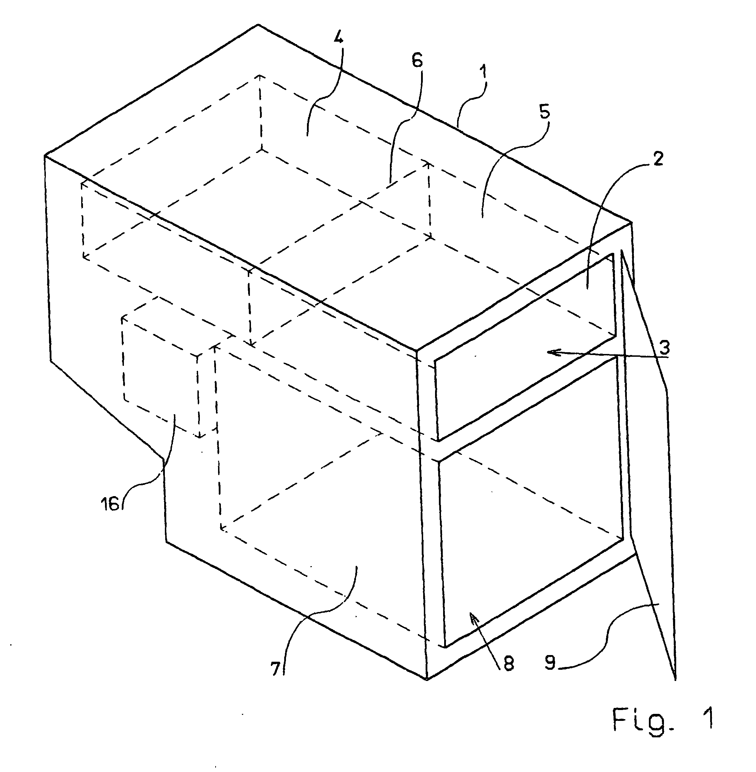

Dans la réalisation illustrée sur la figure 1, un dispositif selon l'invention comprend une enceinte isolante 1 ayant un espace intérieur de réception de plateau 2 accessible par un passage antérieur 3 et divisé en un compartiment postérieur 4 et un compartiment antérieur 5 qui communiquent l'un avec l'autre par un passage intermédiaire 6. Un espace intérieur complémentaire 7 est placé au-dessous de l'espace intérieur de réception de plateau 2, et est accessible par un côté antérieur ouvert 8. Une porte antérieure 9 permet d'obturer sélectivement le côté antérieur ouvert 8 et le passage antérieur 3.

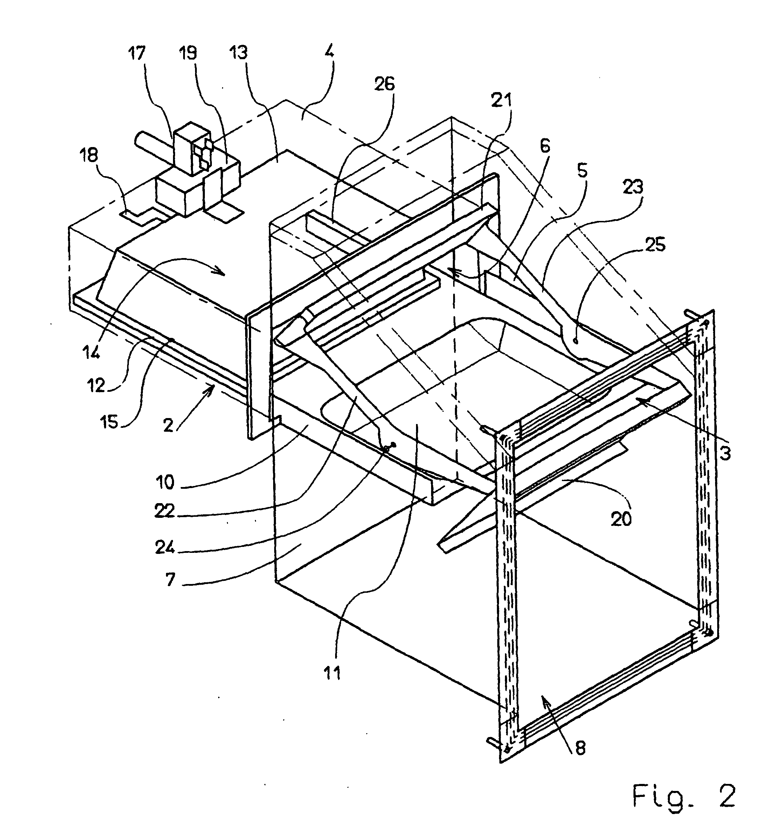

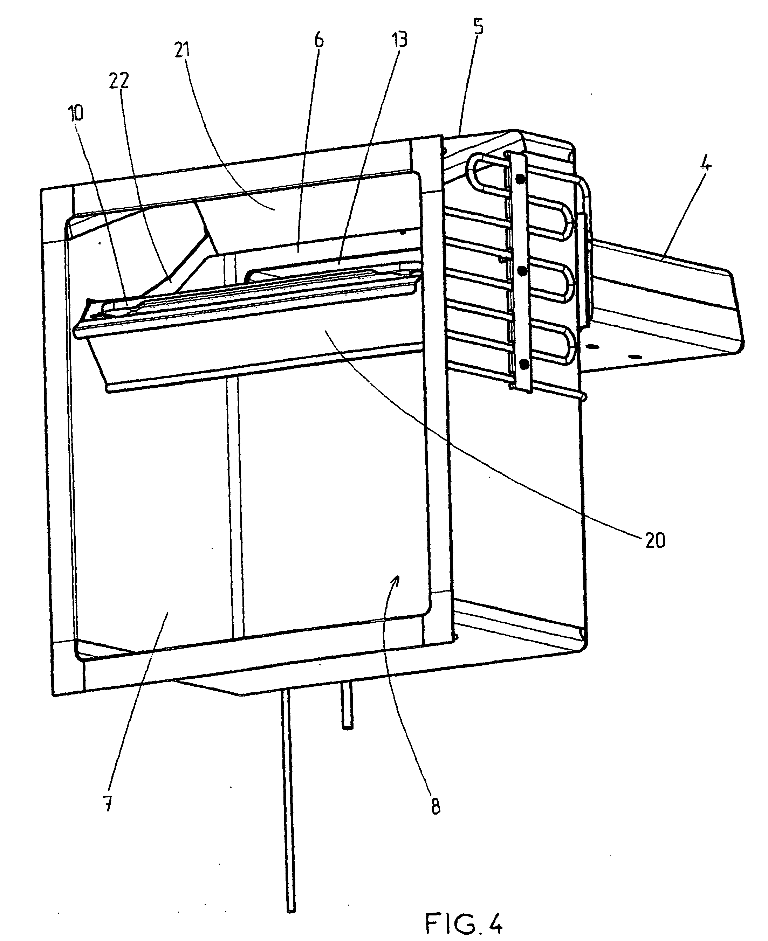

On se référera maintenant aux figures 2 à 5, qui représentent plus clairement les compartiments intérieurs, les parois périphériques de l'enceinte isolante 1 ayant été enlevées.

On retrouve ainsi l'espace intérieur de réception de plateau 2, le passage antérieur 3, le compartiment postérieur 4, le compartiment antérieur 5, le passage intermédiaire 6.

On a représenté sur ces figures, plus complètement sur la figure 2, un plateau-repas 10, comportant une partie antérieure 11 destinée à supporter les aliments devant être consommés froids, et une partie postérieure 12 destinée à supporter les aliments devant être consommés chauds. La partie postérieure 12 est surmontée d'une cloche 13 qui définit un espace d'échauffement 14. Ainsi, l'espace d'échauffement 14 est constitué par le volume situé entre la partie postérieure 12 du plateau-repas 10 et la cloche 13 qui lui est superposée. L'espace d'échauffement 14 se trouve fermé, à l'exception de deux petites ouvertures latérales telles que l'ouverture 15, prévues dans deux faces latérales opposées de la cloche 13.

Dans la réalisation illustrée, qui est une disposition habituelle, le plateau-repas 10 est divisé en deux parties antérieure 11 et postérieure 12 sensiblement égales.

Une source de froid 16 (figure 1) est adaptée pour maintenir à température de conservation appropriée l'espace intérieur de réception de plateau 2, comprenant les compartiments postérieur 4 et antérieur 5, ainsi que l'espace intérieur complémentaire 7.

Une source de chaleur 17, prévue dans le compartiment postérieur 4, est adaptée pour générer une énergie calorifique de remise à température dans l'espace d'échauffement 14.

Dans la réalisation illustrée sur les figures, la source de chaleur 17 comprend un circuit d'alimentation en énergie électrique, avec des conducteurs électriques 18 connectés à des bornes à l'intérieur d'un boîtier 19. Les bornes viennent en contact de deux pistes conductrices correspondantes prévues sur la surface supérieure de la cloche 13. Les pistes conductrices sont connectées à une ou plusieurs résistances électriques qui sont prévues dans la paroi supérieure de la cloche 13 et adaptées pour échauffer l'espace d'échauffement 14.

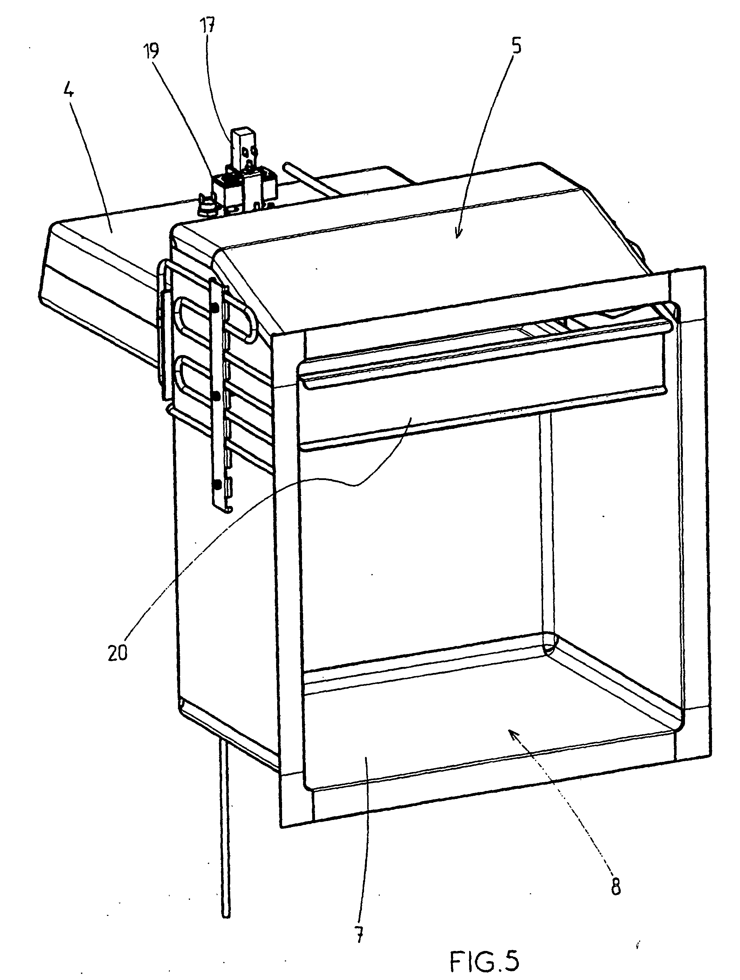

Selon l'invention, le dispositif comprend un volet de fermeture antérieur 20 et un volet de fermeture intermédiaire 21, couplés mécaniquement l'un à l'autre en déplacement entre une position fermée illustrée sur la figure 5 et une position ouverte illustrée sur la figure 2 et sur les figures 2 à 4.

En position fermée illustrée sur la figure 5, le volet de fermeture antérieur 20 ferme le passage antérieur 3, et le volet de fermeture intermédiaire 21 (figure 2) ferme le passage intermédiaire 6 au-dessus du plateau-repas 10, assurant ainsi une isolation thermique entre le compartiment postérieur 4 et le compartiment antérieur 5.

En position ouverte illustrée sur la figure 2, les volets de fermeture antérieur 20 et intermédiaire 21 sont escamotés pour autoriser le déplacement antéropostérieur du plateau-repas 10 et des aliments qu'il porte, avec la cloche 13.

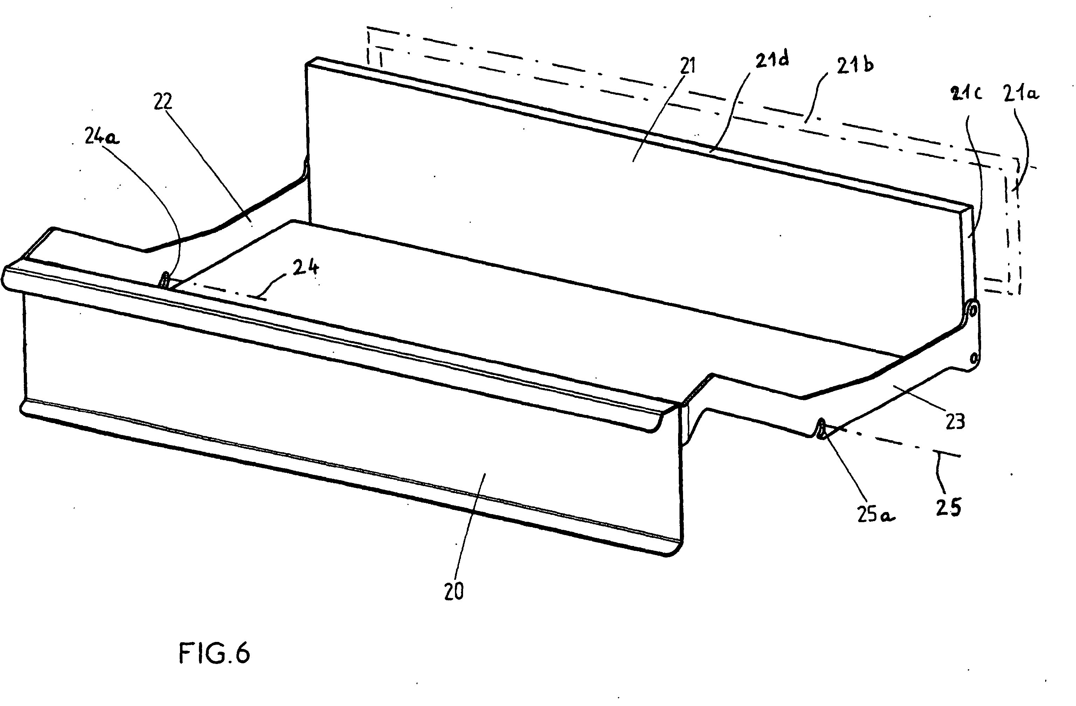

Comme on le voit sur la figure 2, et plus en détail sur la figure 6, les deux volets de fermeture antérieur 20 et intermédiaire 21 sont reliés rigidement l'un à l'autre par deux bras latéraux longitudinaux 22 et 23 eux-mêmes articulés selon deux axes de rotation 24 et 25 respectifs colinéaires transversaux. Les deux volets de fermeture 20 et 21 et les deux bras latéraux longitudinaux 22 et 23 forment un ensemble rigide basculant qui pivote entre les positions fermée et ouverte.

Sur la figure 2, les bras latéraux longitudinaux 22 et 23 comportent chacun un trou dans lequel s'engage un axe de rotation respectif 24 ou 25 solidaire du bâti du dispositif. Dans cette réalisation, le démontage éventuel de l'ensemble rigide basculant constitué par les deux bras latéraux longitudinaux 22 et 23 et les deux volets de fermeture 20 et 21 nécessite l'enlèvement préalable des axes de rotation 24 et 25.

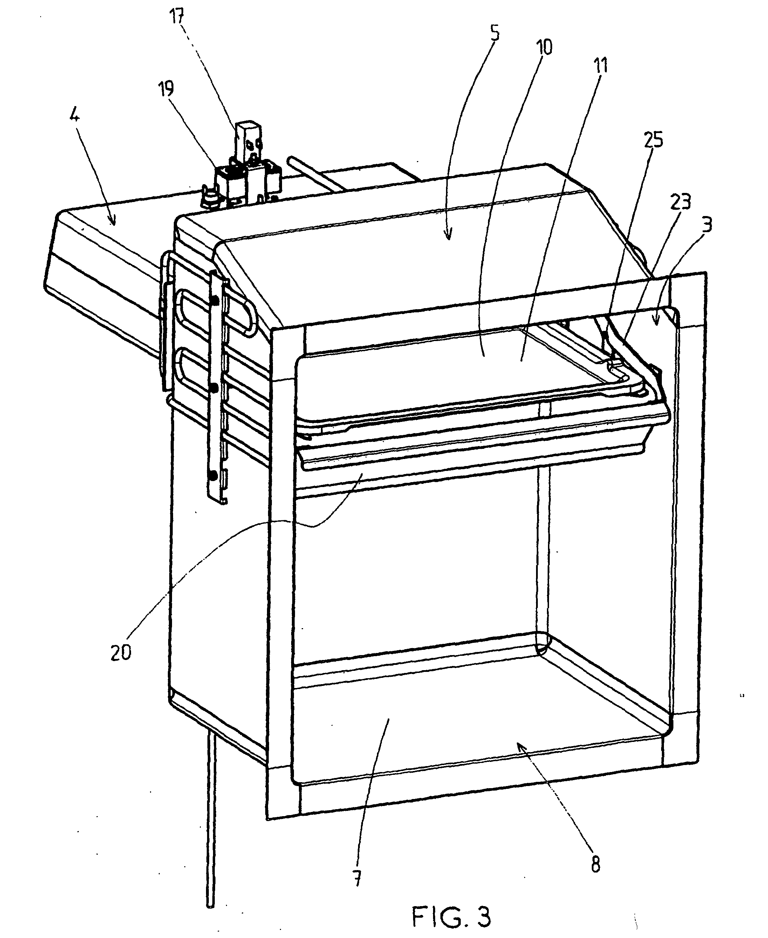

Selon l'invention, illustré en particulier sur la figure 6, et apparent également sur la figure 3, l'ensemble rigide basculant est rendu aisément démontable, pour son nettoyage. Pour cela, l'articulation est assurée par des ergots horizontaux fixes, solidaires du bâti du dispositif, et qui s'engagent verticalement dans deux encoches 24a et 25a prévues dans le bord inférieur des bras latéraux longitudinaux 22 et 23. De la sorte, le démontage de l'ensemble rigide basculant peut être réalisé simplement en soulevant l'ensemble rigide basculant verticalement pour dégager les encoches 24a et 25a à l'écart des ergots constituant les axes de rotation, puis en déplaçant horizontalement l'ensemble rigide basculant par translation vers l'avant pour le sortir du dispositif. Après nettoyage, il est aisé d'engager à nouveau l'ensemble rigide basculant par translation horizontale vers l'arrière du dispositif, puis d'engager les encoches 24a et 25a sur les ergots.

Pour rester compatible avec les possibilités de démontage et de remontage de l'ensemble rigide basculant, l'étanchéité peut être avantageusement assurée par des languettes élastiques, par exemple en élastomère, qui viennent en appui glissant sur une surface de contact conformée. Par exemple, les bords latéraux du volet 21 peuvent avantageusement être incurvés en arc centré sur l'axe de rotation 24 ou 25, et des languettes élastiques incurvées solidaires du bâti peuvent rester en appui frontal sur les bords latéraux du volet 21. De même, les bords transversaux du volet 21 sont rectilignes, et des languettes élastiques transversales rectilignes solidaires du bâti peuvent rester en appui frontal sur les bords transversaux du volet 21 lorsque celui-ci est en position fermée. La figure 6 illustre schématiquement une languette élastique 21a venant en appui frontal sur la zone postérieure du bord latéral 21c du volet 21, tandis que la languette élastique supérieure 21b vient en appui frontal sur la partie postérieure du bord transversal supérieur 21d du volet 21.

On peut avantageusement prévoir un verrou 26 (figure 2), par exemple positionné au-dessus de la cloche 13 pour coopérer avec le volet de fermeture intermédiaire 21. Le verrou permet de bloquer sélectivement l'ensemble basculant 20-23 en position fermée pendant le fonctionnement de remise à température du dispositif.

Comme on le voit sur la figure 2, dans ce mode de réalisation, lorsque le dispositif est en position ouverte, le volet de fermeture antérieur 20 est abaissé au-dessous du passage antérieur 3, tandis que le volet de fermeture intermédiaire 21 est relevé au-dessus du passage intermédiaire 6.

Le fonctionnement du dispositif est le suivant : lors de la distribution des plateaux-repas 10, l'utilisateur ouvre la porte antérieure 9, puis manipule le volet de fermeture antérieur 20 pour l'abaisser, ce qui relève simultanément le volet de fermeture intermédiaire 21. L'utilisateur peut alors introduire le plateau-repas 10 dans l'espace intérieur de réception de plateau 2, avec la cloche 13 dans le compartiment postérieur 4 et avec la partie antérieure 11 du plateau dans le compartiment antérieur 5. Le compartiment postérieur 4 est conformé pour contenir entièrement la partie postérieure 12 du plateau-repas 10 avec la cloche 13, tandis que le compartiment antérieur 5 est conformé pour contenir entièrement la partie antérieure 11 du plateau-repas 10.

L'utilisateur peut alors fermer les volets en manipulant le volet de fermeture antérieur 20 pour le ramener en position fermée illustrée sur la figure 5. Et l'utilisateur peut fermer la porte antérieure 9. Le dispositif est alors adapté pour maintenir à température de conservation froide le plateau-repas 10 et les aliments qu'il contient.

Par une manoeuvre manuelle ou automatique, les moyens d'alimentation en énergie alimentent les résistances électriques contenues dans la cloche 13, qui échauffent l'espace d'échauffement 14 et les aliments qu'il contient. Pendant ce temps, la source de froid continue à conserver le froid dans les aliments destinés à être consommés froids et dans l'espace intérieur complémentaire 7.

Après remise à température, l'utilisateur peut abaisser le volet de fermeture antérieur 20, qui est déverrouillé, et il peut retirer le plateau-repas 10.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour la conservation et la remise à température d'aliments placés sur un plateau-repas, comprenant :
- une enceinte isolante (1) ayant un espace intérieur de réception de plateau (2) accessible par un passage antérieur (3) et divisé en un compartiment postérieur (4) et un compartiment antérieur (5) qui communiquent l'un avec l'autre par un passage intermédiaire (6),
- une source de froid (16) adaptée pour maintenir à température de conservation appropriée l'espace intérieur de réception de plateau (2) dans l'enceinte isolante (1),
- une source de chaleur (17), adaptée pour générer une énergie calorifique de remise à température dans un espace d'échauffement (14) situé dans l'un des compartiments antérieur (5) ou postérieur (4),
- un volet de fermeture antérieur (20) et un volet de fermeture intermédiaire (21), couplés mécaniquement l'un à l'autre en déplacement entre (i) une position fermée dans laquelle le volet de fermeture antérieur (20) ferme le passage antérieur (3) et le volet de fermeture intermédiaire (21) ferme le passage intermédiaire (6) au-dessus du plateau-repas (10) pour assurer une isolation thermique, et (ii) une position ouverte dans laquelle les volets de fermeture antérieur (20) et intermédiaire (21) sont escamotés pour autoriser le déplacement antéropostérieur du plateau-repas (10) et des aliments qu'il porte,
**caractérisé en ce que** :
- les deux volets de fermeture antérieur (20) et intermédiaire (21) sont reliés rigidement l'un à l'autre par deux bras latéraux longitudinaux (22, 23) qui sont montés pivotants dans l'espace intérieur de réception de plateau selon deux axes de rotation (24, 25) colinéaires transversaux, les deux volets (20, 21) et les deux bras (22, 23) formant un ensemble rigide qui bascule entre les positions fermée et ouverte,
- les axes de rotation (24, 25) sont des ergots horizontaux qui s'engagent dans des encoches verticales (24a, 25a) de manière amovible.

2. Dispositif selon la revendication 1, **caractérisé en ce que** l'étanchéité de pourtour du volet de fermeture intermédiaire (21) est assurée par des languettes élastiques (21a, 21b).

3. Dispositif selon l'une des revendications 1 ou 2, **caractérisé en ce que** :
- soit les axes de rotation sont des ergots horizontaux fixes qui s'engagent verticalement de manière amovible dans des encoches verticales des bras de liaison,
- soit les axes de rotation sont des ergots horizontaux prévus sur les bras de liaison et s'engageant de manière amovible dans des encoches verticales fixes du bâti.

4. Dispositif selon l'une quelconque des revendications 1 à 3, **caractérisé en ce que** l'espace d'échauffement (14) est situé dans le compartiment postérieur (4).

5. Dispositif selon l'une quelconque des revendications 1 à 4, **caractérisé en ce que** l'espace d'échauffement (14) est situé entre une partie postérieure (12) du plateau-repas (10) et une cloche (13) qui lui est superposée pour fermer ledit espace d'échauffement (14).

6. Dispositif selon la revendication 5, **caractérisé en ce qu'**il comprend des moyens d'alimentation en énergie électrique (18, 19), adaptés pour alimenter en énergie électrique une ou plusieurs résistances électriques dans l'espace d'échauffement (14).

7. Dispositif selon la revendication 6, **caractérisé en ce que** la ou les résistances électriques sont incorporées dans la paroi de la cloche (13).

8. Dispositif selon la revendication 7, **caractérisé en ce que** la cloche (13) est amovible et portée par le plateau-repas (10).

9. Dispositif selon l'une quelconque des revendications 1 à 8, **caractérisé en ce qu'**il comprend en outre un espace intérieur complémentaire (7), placé au-dessous de l'espace intérieur de réception de plateau (2), accessible par un côté antérieur ouvert (8), climatisé par la source de froid (16), avec une porte antérieure (9) pour obturer sélectivement ledit côté antérieur ouvert (8) et le passage antérieur (3) en avant du volet de fermeture antérieur (20).

10. Dispositif selon l'une quelconque des revendications 1 à 9, **caractérisé en ce qu'**il comprend un verrou (26) adapté pour bloquer sélectivement l'ensemble basculant (20, 21, 22, 23) en position fermée pendant le fonctionnement de remise à température du dispositif.

## Patentansprüche

1. Einrichtung zum Halten der Temperatur und zum Erwärmen von Lebensmitteln, die auf einem Speisetablett angeordnet sind, mit:
- einem Isolierschrank (1), der einen Innenraum zur Aufnahme des Tabletts (2) aufweist, der durch eine vordere Passage (3) zugänglich ist und in ein hinteres Abteil (4) und ein vorderes Abteil (5) unterteilt ist, die durch eine zwischenliegende Passage (6) miteinander in Verbindung stehen,
- einer Kältequelle (16), die zum Aufrechterhalten einer geeigneten Haltetemperatur des Innenraumes für die Aufnahme des Tabletts (2) in dem Isolierschrank (1) ausgebildet ist,
- einer Wärmequelle (17), die zum Erzeugen einer Wärmeenergie zum Aufwärmen in einem Heizraum (14) ausgebildet ist, der in einem der vorderen (5) oder hinteren (4) Abteile ausgebildet ist,
- einer vorderen Verschlußklappe (20) und einer zwischenliegenden Verschlußklappe (21), die mechanisch miteinander für eine Verschiebung zwischen (i) einer geschlossenen Stellung, in der die vordere Verschlußklappe (20) die vordere Passage (3) verschließt und die zwischenliegende Verschlußklappe (21) die zwischenliegende Passage (6) oberhalb des Speisetabletts (10) verschließt, um eine thermische Isolation sicherzustellen, und (ii) einer offenen Stellung, in der die vordere (20) und zwischenliegende (21) Verschlußklappe eingezogen sind, um eine Hin- und Herverschiebung des Speisetabletts (10) und der Lebensmittel, die es trägt, zu gestatten, gekoppelt sind,
**dadurch gekennzeichnet, daß**:
- die beiden vorderen (20) und zwischenliegenden (21) Verschlußklappen starr miteinander durch zwei seitliche, längs verlaufende Arme (22, 23) verbunden sind, die schwenkbar im Innenraum für die Aufnahme des Tabletts an zwei Drehachsen (24, 25) befestigt sind, die miteinander fluchtend quer verlaufen, wobei die beiden Klappen (20, 21) und die beiden Arme (22, 23) eine starre Einheit bilden, die zwischen den geschlossenen und geöffneten Stellungen schwenkbar ist,
- die Drehachsen (24, 25) horizontale Vorsprünge sind, die in lösbarer Weise in vertikale Vertiefungen (24a, 25a) eingreifen.

2. Einrichtung nach Anspruch 1, **dadurch gekennzeichnet, daß** die Dichtigkeit des Umfanges der zwischenliegenden Verschlußklappe (21) durch elastische Laschen (21a, 21b) sichergestellt ist.

3. Einrichtung nach einem der Ansprüche 1 oder 2, **dadurch gekennzeichnet, daß**:
- entweder die Drehachsen horizontale feste Vorsprünge sind, die in lösbarer Weise in die vertikalen Ausnehmungen der Verbindungsarme vertikal eingreifen,
- oder die Drehachsen horizontale Vorsprünge sind, die am Verbindungsarm vorgesehen sind und in lösbarer Weise in vertikale Ausnehmungen eingreifen, die am Rahmen befestigt sind.

4. Einrichtung nach irgendeinem der Ansprüche 1 bis 3, **dadurch gekennzeichnet, daß** der Heizraum (14) im hinteren Abteil (4) angeordnet ist.

5. Einrichtung nach irgendeinem der Ansprüche 1 bis 4, **dadurch gekennzeichnet, daß** der Heizraum (14) zwischen einem hinteren Teil (12) des Speisetabletts (10) und einer Glocke (13) angeordnet ist, die darauf aufgesetzt ist, um den genannten Heizraum (14) abzuschließen.

6. Einrichtung nach Anspruch 5, **dadurch gekennzeichnet, daß** sie Mittel (18, 19) zur Versorgung mit elektrischer Energie enthält, die zum Versorgen eines oder mehrerer elektrischer Widerstände in dem Heizraum (14) mit elektrischer Energie ausgebildet sind.

7. Einrichtung nach Anspruch 6, **dadurch gekennzeichnet, daß** der oder die elektrischen Widerstände in der Wandung der Glocke (13) untergebracht sind.

8. Einrichtung nach Anspruch 7, **dadurch gekennzeichnet, daß** die Glocke (13) lösbar ist und von dem Speisetablett (10) getragen wird.

9. Einrichtung nach irgendeinem der Ansprüche 1 bis 8, **dadurch gekennzeichnet, daß** sie zusätzlich einen ergänzenden Innenraum (7) enthält, der unterhalb des Innenraumes für die Aufnahme des Tabletts (2) angeordnet ist, der durch eine vordere offene Seite (8) zugänglich ist, der durch eine Kältequelle (16) klimatisiert ist, der mit einer vorderen Tür (9) versehen ist, um selektiv die genannte vordere offene Seite (8) und die vordere Passage (3) vor der vorderen Verschlußklappe (20) zu verschließen.

10. Einrichtung nach irgendeinem der Ansprüche 1 bis 9, **dadurch gekennzeichnet, daß** sie einen Riegel (26) enthält, der zum wahlweisen Blockieren der schwenkenden Einheit (20, 21, 22, 23) in der geschlossenen Stellung während der Funktion des Aufwärmens der Einrichtung ausgebildet ist.

## Claims

1. Device for storing and heating foods on a meal tray, the device comprising :
- an insulated enclosure (1) having an interior space (2) for receiving a tray accessible via a front passage (3) and divided into a rear compartment (4) and a front compartment (5) that communicate with each other via an intermediate passage (6),
- a cooling device (16) adapted to maintain an appropriate storage temperature in the interior space (2) in the insulated enclosure (1) for receiving a tray,
- a heating device (17) adapted to generate a heat energy in a heating space (14) in the front compartment (5) or the rear compartment (4),
- a front closure flap (20) and an intermediate closure flap (21), that are mechanically coupled together to move between (i) a closed position in which the front closure flap (20) closes the front passage (3) and the intermediate closure flap (21) closes the intermediate passage (6) above the meal tray (10) to provide thermal insulation, and (ii) an open position in which the front (20) and intermediate (21) closure flaps are retracted to allow the meal tray (10) and the foods on it to move back and forth,
**characterized in that** :
- the front closure flap (20) and the intermediate closure flap (21) are rigidly connected together by two longitudinal lateral arms (22, 23) that are mounted in the interior space for receiving a tray on two colinear transverse pivots (24, 25), the two flaps (20, 21) and the two arms (22, 23) together forming a rigid assembly that tilts between an open position and a closed position,
- the pivots (24, 25) are horizontal pegs adapted to engage removably in vertical notches (24a, 25a).

2. Device according to claim 1, **characterized in that** a seal is provided at the perimeter of the intermediate closure flap (21) by elastic tongues (21a, 21b).

3. Device according to either claim 1 or claim 2, **characterized in that** :
- either the pivots are fixed horizontal pegs which engage vertically and removably in vertical notches of the connection arms,
- or the pivots are horizontal pegs provided on the connection arms and engage removably in fixed vertical notches of the structure.

4. Device according to any of claims 1 to 3, **characterized in that** the heating space (14) is in the rear compartment (4).

5. Device according to any of claims 1 to 4, **characterized in that** the heating space (14) is between a rear portion (12) of the meal tray (10) and a cloche (13) that is placed on it to close said heating space (14).

6. Device according to claim 5, **characterized in that** it includes electrical power supply means (18, 19) adapted to supply electrical power to one or more electrical heating elements in the heating space (14).

7. Device according to claim 6, **characterized in that** the electrical heating element(s) are incorporated in the wall of the cloche (13).

8. Device according to claim 7, **characterized in that** the cloche (13) is removable and is carried by the meal tray (10).

9. Device according to any of claims 1 to 8, **characterized in that** it further includes a complementary interior space (7), that is under the interior space (2) for receiving a tray, accessible via an open front side (8), cooled by the cooling device (16), with a front door (9) for selectively closing said open front side (8) and the front passage (3) in front of the front closure flap (20).

10. Device according to any of claims 1 to 9, **characterized in that** it includes a latch (26) adapted to selectively lock the tilting assembly (20, 21, 22, 23) in the closed position when the device is heating.
